# EUROPEAN PATENT APPLICATION

(11) **EP 2 008 877 A1**
(43) Date of publication of application: **31.12.2008**
(21) Application number: 07111456.5
(22) Date of filing: 29.06.2007
(51) Int. Cl.: B60R 21/06

(54) **Soft cargo net**

(71) Applicant: Ford Global Technologies, LLC, Dearborn, MI 48126 (US)
(72) Inventor: Larsson, Marie, 424 70, Olofstorp (SE); Mossberg, Maria, 444 94, Ucklum (SE)
(74) Representative: Bergquist, Kjell Gunnar

(57) **Abstract**

The invention relates to a cargo restraint arranged between a passenger compartment and an article storage compartment in a utility vehicle. The cargo restraint comprises a web body (106), a first elongate supporting bar (110) attached to the upper marginal edge of the web body and being located in an upper section of the storage compartment attached at a pair of opposed, outer ends (111, 112)., and at least a second and a third elongated supporting bar (120, 130) attached to the lower marginal edge of the web body, said second and third elongated supporting bar (120, 130) being located in a lower section of the storage compartment attached at a pair of opposed, outer ends (121, 131). At least one pair of adjacent, facing end sections (122, 132) of the said second and third elongate supporting bars (120, 130) are arranged separate and movable relative to each other.

## Description

### TECHNICAL FIELD

The present invention relates generally to vehicle safety devices, and more particularly, to a frame and attachment construction for use with a cargo restraint that protects persons in the passenger compartment from objects thrust from the storage compartment in a utility vehicle during a sudden deceleration.

### BACKGROUND ART

Many utility and sport vehicle interiors are configured with a cargo or storage compartment disposed directly to the rear of a passenger compartment. The boundary separating these spaces is primarily open such that the only obstruction there between is provided by the rear seat rest of the vehicle. This presents a fully exposed area between the upper edge of the rear seat rest and the interior vehicle roof. Accordingly, these configurations pose a potential safety risk in the event of a collision, a sudden speed reduction or a change of direction of the vehicle. In these situations, unsecured cargo and the like may be thrust forward from the storage compartment space into the passenger compartment where it may cause injury to passengers.

Prior art cargo restraints or safety web arrangements have been proposed to address this problem. For example, EP1128992 shows a known arrangement that utilizes a generally rectangular safety web suspended transversely between the passenger compartment and the storage compartment. The web arrangement attaches to the vehicle at its upper and lower side edges. The upper and lower side edge of the web contains rod-like frames, which are each provided with a hinge to allow folding of the safety web when not in use.

This known safety web arrangement is provided with hinges in order to facilitate handling and stowing of the safety web. When not in use, the safety web can be wound onto one of the two struts and it then occupies correspondingly little space. However, when mounting or removing this safety web, the relatively long struts and the locking/unlocking of the hinges present a problem in handling the web.

One object of the present invention to provide an improved cargo restraint construction that adequately addresses safety concerns in a utility vehicle and which, when not in use, can easily be folded and stored in the vehicle.

It is another object of the present invention to provide a cargo restrain construction that includes an improved frame support which is deformable in preselected locations to transfer tension forces applied to the restraint and to reduce the risk of tearing or breakage of a web or net making.

### DISCLOSURE OF INVENTION

The above problems have been solved by a method and an arrangement according to the appended claims.

According to a preferred embodiment, the invention relates to a cargo restraint arranged between a passenger compartment and an article storage compartment in a utility vehicle interior defined by a vehicle ceiling, opposed side walls and a load floor. The cargo restraint may comprise a web body including an upper marginal edge extending substantially between the vehicle side walls proximate to the vehicle ceiling, and a lower marginal edge extending substantially between the vehicle side walls proximate to a passenger seat back. The web body may extend downwards into a position at least partially overlapping an upper portion of the seat back, into a position adjacent the upper surface of the load floor, or into any intermediate position, depending on the size of the web body and the desired extension thereof. A first elongate supporting bar may be attached to the upper marginal edge of the web body, the first supporting bar having its opposed ends connected to an upper section of the storage compartment to suspend the web body there from. The first elongate supporting bar may comprise at least two sections, said sections of the first elongate supporting bar being movable relative to each other into an operative mounting position that defines an effective length of the first elongate supporting bar, said sections of the bar being connected with a connector which secures the sections of the first elongate supporting bar in the operative mounting position. In its mounted position, the first elongate supporting bar makes up an upper supporting bar.

The cargo restraint further comprises at least a second and a third elongated supporting bar attached to the lower marginal edge of the web body, forming a lower supporting bar. The second and third elongated supporting bar may be located in a lower section of the storage compartment and are attached at a pair of opposed, outer ends. At least one pair of adjacent, facing end sections of the said second and third elongate supporting bars may be arranged separate from and movable relative to each other. The number of facing end sections is dependent on the number of sections making up the lower supporting bar.

The number of sections in the first elongate supporting bar is equal to the number of elongated supporting bars attached to the lower marginal edge of the web body. The number of sections may be chosen depending on the desired length of the folded cargo restraint, and would preferably, but not necessarily be limited to two or three sections. The connector between each section of the first elongate supporting bar is a hinge having a hinge axis that subdivides the first elongate supporting bar into said sections and which permits shortening the effective length of the first elongate supporting bar by folding of the sections. The hinges for the respective first elongate supporting bar are arranged such that said sections of the first elongate supporting bar are of equal length. Each hinge of the first elongate supporting bar is aligned with each elongated supporting bar attached to the lower marginal edge of the web body so that, when the cargo restraint is mounted in the vehicle, the first elongate supporting bar is parallel to the second and third elongated supporting bars. The pivot axis of the at least one hinge for the first elongate supporting bar is at least approximately aligned with a line intersecting the longitudinal axes of the second and third elongated supporting bars when the cargo restraint is mounted in an operative position the vehicle.

The at least one hinge for the first elongate supporting bar is lockable in at least a first position. The said first position corresponds to an operative position of the respective strut. The lockable position can be achieved by any suitable means, such as the frictional forces between adjacent surfaces or a spring loaded locking means. The first elongate supporting bar may be released from its locked position by applying sufficient force to overcome the friction between cooperating surfaces in the hinge. Alternatively it may be released by overcoming a spring loaded latch, which may be overcome by applying sufficient force or by releasing the latch using a lever or a push button.

The at least one hinge for the first elongate supporting bar may also be releasably lockable in a folded form. The hinge may be provided with a

The web body making up the main part of the cargo restraint may preferably, but not necessarily, comprise a net. The net may be made from any suitable spun fabric or plastic or reinforced plastic material. Alternatively the web may comprise a sheet of fabric or plastic material

The opposed ends of the first supporting bar are adapted to be engaged in receiving slots formed in the side walls of the upper section of the storage compartment. The ends of the first supporting bar are provided with attachment means allowing a user to hook the ends in place from one side of the vehicle, whereby the cooperating slots and attachment means are supported to absorb forces transmitted from the web body when objects come into contact with said web body.

Similarly, the opposed ends of the second and third elongated supporting bars are adapted to be engaged in receiving slots formed in the side walls of the lower section of the storage compartment. The opposed ends of the second and third elongated supporting bars may be provided with the same cooperating slots and attachment means as used for the first supporting bar, or merely rest in cooperating slots preventing forwards and upward displacement of the ends of the second and third elongated supporting bars. In the latter example, additional anchoring members may be used to hold the second and third bars in place.

For instance, the second and third elongated supporting bars may be secured to the vehicle adjacent the load floor intermediate the side walls. In particular, said second and third elongated supporting bars are secured to the vehicle at a fastening location intermediate the ends of the respective second and third supporting bar. In order to achieve this, each said second and third elongated supporting bar may include anchoring members at a predetermined distance from the opposite, outer ends of said bars. The anchoring members may be provided with snap-on connectors, or be attached using hooks or connectors cooperating with existing load hooks in the load floor.

The cargo restraint may be arranged in a first alternative position proximate to a rear passenger seat back. This position is commonly used when at least a part of the rear passenger seat is in use, wherein the cargo restraint is used for reducing the loading on the seat back, for preventing objects from being thrown forward over the upper part of the rear seat back, and/or for restraining objects from being displaced forwards where at least a section of the rear passenger seat back has been folded to form an extended load floor.

The restraint may also be arranged in a second alternative position proximate a front passenger seat back. This position is preferably, but not necessarily, used when at least a section of the rear passenger seat back is folded to form an extended load floor. As for the first alternative position, the cargo restraint is used for reducing the loading on the front passenger and/or driver seat back, for preventing objects from being thrown forward over the upper part of the front passenger and/or driver seat back, and/or for restraining objects from being displaced forwards where the front passenger seat back has been folded to form an extended load floor next to the drivers seat.

The cargo restraint may comprise a first fabric strip attached to the upper marginal edge of the web body, the first fabric strip being folded over to form a receiving sleeve retaining the first elongated supporting bar therein. The first fabric strip may enclose the at least one hinge or be provided with cut-outs to facilitate folding of the said hinge. A second fabric strip attached to the lower marginal edge of the web body, the second fabric strip being folded over to form a receiving sleeve retaining the second and third elongated supporting bars therein. The receiving sleeve retaining the second and third elongated supporting bars is preferably closed between the facing ends of said bars. Alternatively, the second and third supporting bars may be attached to their respective section of the retaining sleeve, to prevent the facing ends from coming into contact.

### BRIEF DESCRIPTION OF DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows a schematic cross-sectional view of a vehicle storage compartment provided with a cargo restraint according to one embodiment of the invention;
- Figure 2: shows a front view of the cargo restraint of Figure 1;
- Figure 3: shows the cargo restraint of Figure 2 during folding; and
- Figure 4: shows a schematic cross-section of a vehicle comprising two alternative positions for a cargo net according to the invention.

### EMBODIMENTS OF THE INVENTION

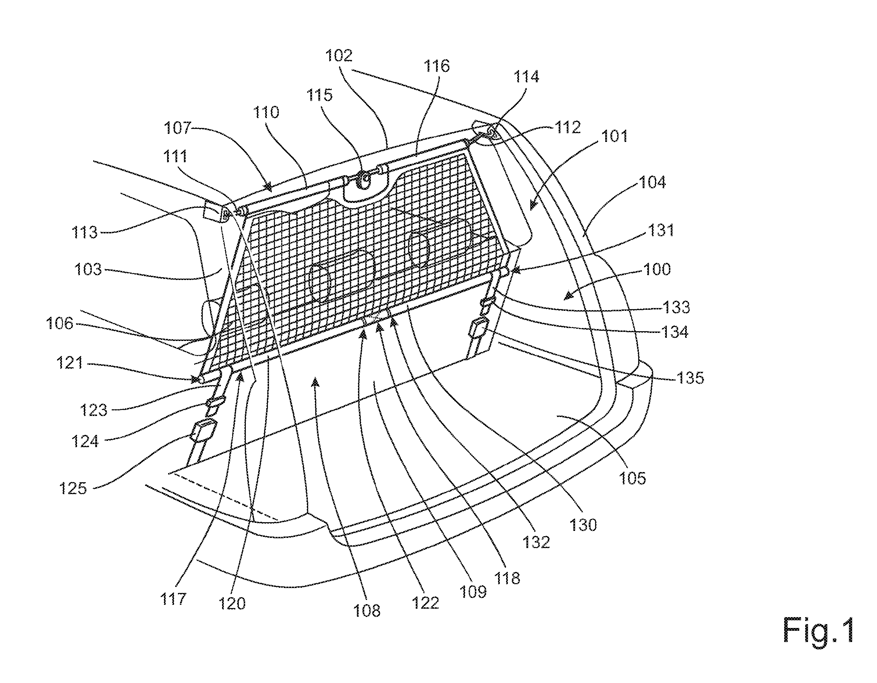

Figure 1 shows a schematic cross-sectional view of a vehicle storage compartment 100 provided with a cargo restraint 101 according to one embodiment of the invention.

The cargo restraint 101 is arranged between a passenger compartment (not shown) and the article storage compartment 100 in a utility vehicle interior defined by a vehicle ceiling 102, opposed side walls 103, 104 and a load floor 105. The cargo restraint 101 comprises a web body 106 including an upper marginal edge 107 extending substantially between the vehicle side walls 103, 104 proximate to the vehicle ceiling 102, and a lower marginal edge 108 extending substantially between the vehicle side walls 103, 104 proximate to a passenger seat back 109. A first elongate supporting bar 110 is attached to the upper marginal edge of the web body 106, which first supporting bar has hooks (not shown) at its opposed ends 111, 112 connected to cooperating slots 113, 114 adjacent the ceiling 102 in the upper section of the storage compartment, in order to suspend the web body 106 there from. The first elongate supporting bar 110 comprises two sections 110a, 110b, which sections are movable relative to each other by means of a hinge 115 into an operative mounting position that defines an effective length of the first elongate supporting bar 110. The hinge 115 connecting the two sections 110a, 110b of the bar is lockable in a first position corresponding to an operative position of the first elongate supporting bar 110 in the operative mounting position shown in Figure 1, or releasable to allow said sections 110a, 110b of the first elongate supporting bar 110 to be folded and stowed.

The cargo restraint 101 further comprises a second and a third elongated supporting bar 120, 130 attached to the lower marginal edge 108 of the web body 106. The second and third elongated supporting bar 120, 130 are located in a lower section of the storage compartment 100 and are attached at a pair of opposed, outer ends 121, 131. At least one pair of adjacent, facing end sections 122, 132 of the said second and third elongate supporting bars 120, 130 are arranged separate from and movable relative to each other.

In the example shown in Figure 1, the second and third elongated supporting bars 120, 130 are secured to the vehicle adjacent the load floor 105 intermediate the side walls 103, 104. In particular, said second and third elongated supporting bars 120, 130 are secured to the vehicle at a fastening location intermediate the ends of the respective second and third supporting bar, preferably adjacent a central section of the respective bar 120, 130. In order to achieve this, each said second and third elongated supporting bar includes anchoring members at a predetermined distance from the opposite, outer ends of said bars. The anchoring members comprise straps 123, 133 provided with snap-on connectors 124, 134 cooperating with mating connectors 125, 135 attached to the load floor 105. The connectors can be of the same type as used in seat belt attachments.

The cargo restraint 101 comprises a first fabric strip 116 attached to the upper marginal edge 107 of the web body 106. The first fabric strip 116 is folded over to form a receiving sleeve retaining the first elongated supporting bar 110 therein. The first fabric strip 116 is provided with cut-outs to facilitate folding of the said hinge 115. Similarly, a second fabric strip 117 is attached to the lower marginal edge 108 of the web body 106. The second fabric strip 117 is folded over to form a receiving sleeve retaining the second and third elongated supporting bars 120, 130 therein. The receiving sleeve retaining the second and third elongated supporting bars 120, 130 comprises a closed section 118 between the facing ends 122, 132 of said bars.

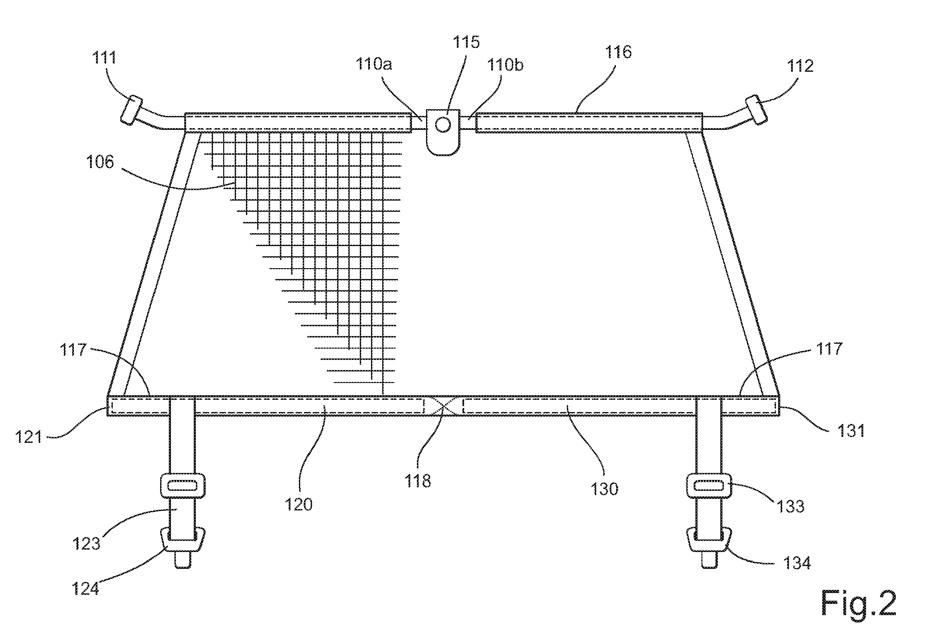

Figure 2 shows a front view of the cargo restraint of Figure 1 in a substantially flat, vertical position, which it assumes when mounted in its operative position in the vehicle. As described above, the cargo restraint 101 comprises a web body 106 including a first elongate supporting bar 110 attached to the upper marginal edge of the web body 106. The first supporting bar has hooks at its opposed ends 111, 112. The first elongate supporting bar 110 comprises two sections 110a, 110b, which sections are locked in the position shown by means of a lockable hinge 115. The operative mounting position defines the effective length of the first elongate supporting bar 110. The hinge 115 connecting the two sections 110a, 110b of the bar is lockable in a first position corresponding to the said operative position, or releasable to allow said sections 110a, 110b of the first elongate supporting bar 110 to be folded and stowed.

The cargo restraint 101 further comprises a second and a third elongated supporting bar 120, 130 attached to the lower marginal edge of the web body 106. The second and third elongated supporting bar 120, 130 are located in a lower section of the storage compartment 100 and are provided with a pair of opposed, outer ends 121, 131 arranged for holding the lower edge of the cargo restraint in position. A pair of adjacent, facing end sections 122, 132 of the said second and third elongate supporting bars 120, 130 are arranged separate from and movable relative to each other.

The cargo restraint 101 comprises a first fabric strip 116 folded over to form a receiving sleeve retaining the first elongated supporting bar 110 therein. The first fabric strip 116 is provided with cut-outs to facilitate folding of the said hinge 115. Similarly, a second fabric strip 117 is attached to the lower marginal edge 108 of the web body 106. The second fabric strip 117 is folded over to form a receiving sleeve retaining the second and third elongated supporting bars 120, 130 therein. The receiving sleeve retaining the second and third elongated supporting bars 120, 130 comprises a closed section 118 between the facing ends 122, 132 of said bars. The closed section 118 is achieved by a seam that closes off the folded sleeve, and which section allows the second and third elongated supporting bars 120, 130 to be folded relative to each other.

When mounting the cargo restraint, the user would first unfold and lock the first elongated supporting bar 110 by means of the hinge. The cooperating portions (not shown) making up the hinge 115 comprise facing surfaces in frictional contact. In order to define a locking position when the first elongated supporting bar 110 is unfolded into its operative position, the facing surfaces are provided with a cooperating projection and notch arrangement.

Alternatively, the hinge 115 can be provided with an actuator, such as a push-button, that is depressed to release the locking mechanism and allow relative movement of the two sections 110a, 110b of the said bar 110, either after an initial depression of the push button or while the push-button is kept depressed.

The second and third elongated supporting bars 120, 130 will automatically unfold as the first elongated supporting bar 110 is unfolded and locked. Once the first elongated supporting bar 110 is unfolded and locked, the user will place the hooks at the respective outer ends 111, 112 of said bar 110 into the cooperating slots 113, 114 adjacent the ceiling 102 in the upper section of the storage compartment (see Figure 1), in order to suspend the web body 106 there from. Finally, the user will connect the straps 123, 133 and their snap-on connectors 124, 134 with the mating connectors 125, 135 attached to the load floor 105 (see Figure 1), in order to anchor the lower edge of the cargo restraint to the vehicle and stretch the web body 106.

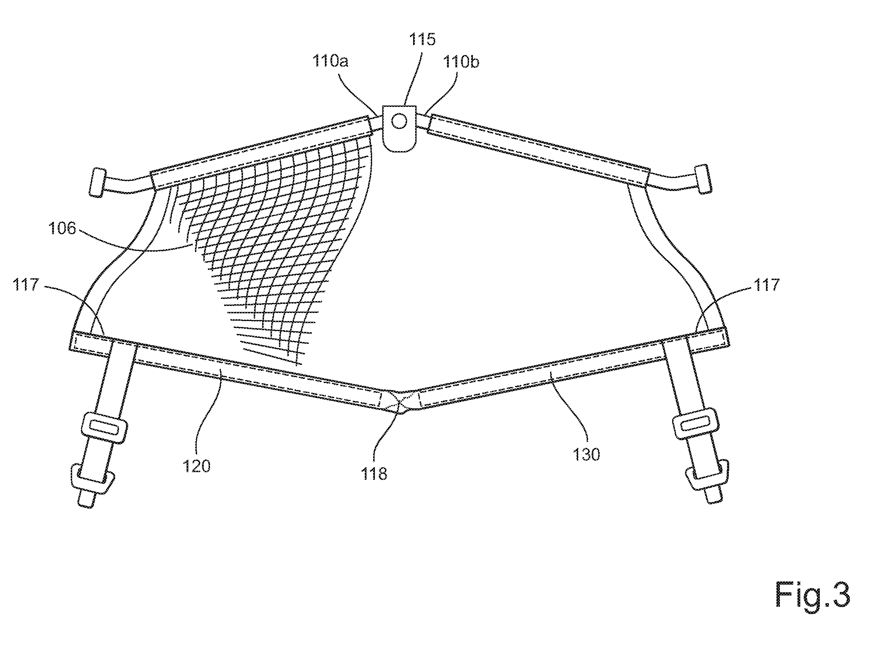

Figure 3 shows the cargo restraint of Figure 2 during folding. When folding the cargo restraint, the mounting operation is simply reversed. After releasing the snap-on connectors 124, 134 and unhooking the hooks at the respective outer ends 111, 112 of said bar 110 from the cooperating slots 113, 114, the cargo restraint may be folded. The hinge 115 is released by applying sufficient force to overcome the frictional forces between the surfaces of the hinge portions, in order to allow relative movement of the two sections 110a, 110b of the said bar 110. The second and third elongated supporting bars 120, 130 will automatically fold as the first elongated supporting bar 110 is folded and locked. In this way, folding and unfolding of the entire cargo restraint can be achieved simply by manipulating the first elongated supporting bar 110 only.

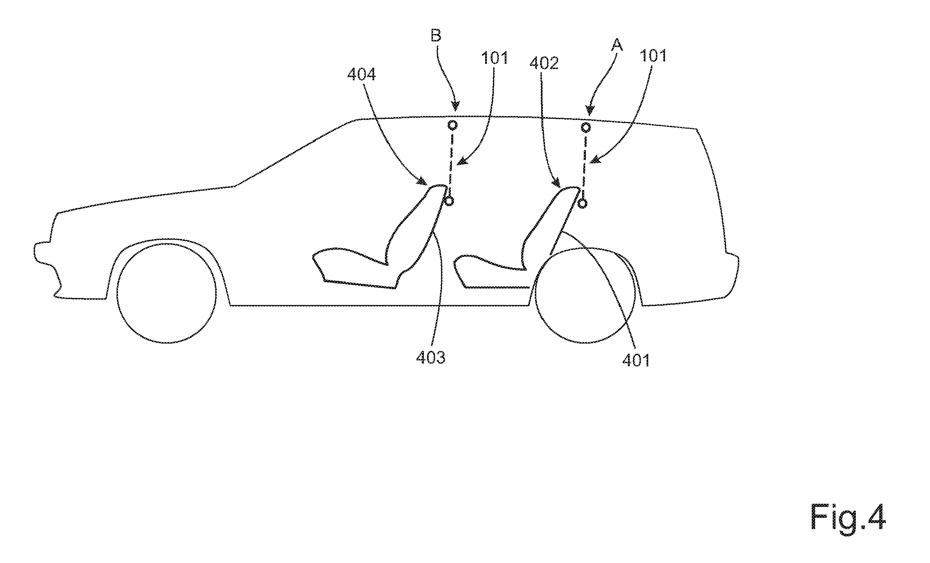

Figure 4 shows a schematic cross-section of a vehicle comprising two alternative positions for a cargo net 101 according to the invention. The figure only shows a schematic representation of the cargo restraint, which can be given a greater or smaller vertical extension depending on the desired function of the cargo restraint.

The cargo restraint may be arranged in a first alternative position A proximate to a rear passenger seat back 401. This position is commonly used when the rear passenger seat 402 is in its upright position, wherein the cargo restraint 101 is used for reducing the loading on the seat back 401 and for preventing objects from being thrown forward over the upper part of the rear seat back. In addition, the cargo restraint can be used for restraining objects from being displaced forwards where at least a section of the rear passenger seat 402 has been folded to form an extended load floor.

The cargo restraint 101 may also be arranged in a second alternative position B proximate a front passenger seat back 403. This position is preferably, but not necessarily, used when the front passenger seat 404 is in its upright position and the rear passenger seat 402 is folded to form an extended load floor. However, the second alternative position B can also be used when the front passenger seat 404 adjacent the driver's seat has been folded to form an extended load floor and/or at least a section of the rear passenger seat 402 is in its upright position. As in the case of the first alternative position, the cargo restraint 101 is used in position B for reducing the loading on the front passenger and/or driver seat back 403, for preventing objects from being thrown forward over the upper part of the front passenger and/or driver seat back, and/or for restraining objects from being displaced forwards where the front passenger seat back has been folded to form an extended load floor next to the drivers seat.

The invention is not limited to the above examples, but may be varied freely within the scope of the appended claims.

## Claims

1. A cargo restraint arranged between a passenger compartment and an article storage compartment in a utility vehicle interior defined by a vehicle ceiling, opposed side walls and a load floor, comprising:
a web body including an upper marginal edge extending substantially between the vehicle side walls proximate to the vehicle ceiling, and a lower marginal edge extending substantially between the vehicle side walls proximate to a passenger seat back;
a first elongate supporting bar attached to the upper marginal edge of the web body, the first supporting bar having its opposed ends connected to an upper section of the storage compartment to suspend the web body there from;
said first elongate supporting bar comprising at least two sections, said sections of the first elongate supporting bar being movable relative to each other into an operative mounting position that defines an effective length of the first elongate supporting bar, said sections of the bar being connected with a connector which secures the sections of the first elongate supporting bar in the operative mounting position, **characterized in that** the cargo restraint further comprises
at least a second and a third elongated supporting bar attached to the lower marginal edge of the web body, said second and third elongated supporting bar being located in a lower section of the storage compartment attached at a pair of opposed, outer ends and
at least one pair of adjacent, facing end sections of the said second and third elongate supporting bars being separate and movable relative to each other.

2. Cargo restraint according to claim 1, **characterized in that** the number of sections in the first elongate supporting bar is equal to the number of elongated supporting bars attached to the lower marginal edge of the web body.

3. Cargo restraint according to claim 1 or 2, **characterized in that** the connector between each section of the first elongate supporting bar is a hinge having a hinge axis that subdivides the first elongate supporting bar into said sections and which permits shortening the effective length of the first elongate supporting bar by folding of the sections.

4. Cargo restraint according to claim 3, **characterized in that** the hinges for the respective first elongate supporting bar are arranged such that said sections of the first elongate supporting bar are of equal length.

5. Cargo restraint according to claim 3 or 4, **characterized in that** each hinge of the first elongate supporting bar is aligned with each elongated supporting bar attached to the lower marginal edge of the web body so that, when the cargo restraint is mounted in the vehicle, the first elongate supporting bar is parallel to the second and third elongated supporting bars.

6. Cargo restraint according to any one of the claims 3-5, **characterized in that** the axis of the at least one hinge for the first elongate supporting bar is aligned with a line intersecting the longitudinal axes of the second and third elongated supporting bars when the cargo restraint is mounted in an operative position the vehicle.

7. Cargo restraint according to any one of the claims 3-6, **characterized in that** the at least one hinge for the first elongate supporting bar is lockable in at least a first position.

8. Cargo restraint according to claim 7, **characterized in that** said first position corresponds to an operative position of the respective strut.

9. Cargo restraint according to claim 7 or 8, **characterized in that** the at least one hinge for the first elongate supporting bar is releasably lockable in a folded form.

10. Cargo restraint according to any one of the above claims, **characterized in that** the web body comprises a net.

11. Cargo restraint according to any one of the above claims, **characterized in that** the opposed ends of the first supporting bar are adapted to be engaged in receiving slots formed in the side walls of the upper section of the storage compartment.

12. Cargo restraint according to any one of the above claims, **characterized in that** the opposed ends of the second and third elongated supporting bars are adapted to be engaged in receiving slots formed in the side walls of the lower section of the storage compartment.

13. Cargo restraint according to any one of the above claims, **characterized in that** said second and third elongated supporting bars are secured to the vehicle adjacent the load floor intermediate the side walls.

14. Cargo restraint according to any one of the above claims, **characterized in that** said second and third elongated supporting bars are secured to the vehicle at a fastening location intermediate the ends of the respective second and third supporting bar.

15. Cargo restraint according to claim 14, **characterized in that** each said second and third elongated supporting bar includes anchoring members at a predetermined distance from the opposite, outer ends of said bars.

16. Cargo restraint according to claim 15, **characterized in that** the anchoring members are provided with hooks or snap-on connectors.

17. Cargo restraint according to any one of the above claims, **characterized in that** the restraint is arranged in a position proximate to a rear passenger seat back.

18. Cargo restraint according to any one of the above claims, **characterized in that** the restraint is arranged in a position proximate a front passenger seat back.

19. Cargo restraint according to any one of the above claims, **characterized in that** a first fabric strip attached to the upper marginal edge of the web body, the first fabric strip being folded over to form a receiving sleeve retaining the first elongated supporting bar therein.

20. Cargo restraint according to any one of the above claims, **characterized in that** a second fabric strip attached to the lower marginal edge of the web body, the second fabric strip being folded over to form a receiving sleeve retaining the second and third elongated supporting bars therein.

21. Cargo restraint according to claim 20, **characterized in that** the receiving sleeve retaining the second and third elongated supporting bars is closed between the facing ends of said bars.
